# EUROPÄISCHE PATENTSCHRIFT

(11) **EP 1 438 916 B1**
(45) Veröffentlichungstag und Bekanntmachung des Hinweises auf die Patenterteilung: **03.10.2007**
(21) Anmeldenummer: 04000309.7
(22) Anmeldetag: 09.01.2004
(51) Int. Cl.: A47J 27/05

(54) **Dampfgargerät und Verfahren zum Betreiben eines Dampfgargeräts**
Steam cooking device and method for its use
Appareil de cuisson à vapeur et procédé d'utilisation

(30) Priorität: 14.01.2003 DE 10301131
(43) Veröffentlichungstag der Anmeldung: 21.07.2004
(73) Patentinhaber: Miele & Cie. KG, 33332 Gütersloh (DE)
(72) Erfinder: Berger, Uwe, 32278 Kirchlengern (DE); Dittrich, Hartmut, Dr., 32257 Bünde (DE); Metz, Thomas, 32257 Bünde (DE)

(56) Entgegenhaltungen:
- US-A- 5 075 121

## Beschreibung

Die Erfindung betrifft ein Dampfgargerät der im Oberbegriff des Anspruchs 1 genannten Art sowie ein Verfahren zum Betreiben eines Dampfgargeräts.

Ein derartiges Dampfgargerät ist beispielsweise aus der nachveröffentlichten Druckschrift DE 101 32 581 A1 bekannt. Das bekannte Dampfgargerät weist einen Garraum auf, der in der Betriebslage des Dampfgargeräts in wenigstens zwei vertikal aufeinander folgende Garraumabschnitte unterteilt und bei dem in jedem Garraumabschnitt ein Temperaturfühler angeordnet ist. Eine in einem oberen Garraumabschnitt angeordnete Dampfeinlassöffnung steht über eine Dampfzuleitung mit einem Dampferzeuger und eine in einem unteren Garraumabschnitt angeordnete Dampfauslassöffnung steht über eine Dampfableitung mit der freien Umgebung in Strömungsverbindung. Darüber hinaus weist das bekannte Dampfgargerät ein Eingabemittel zur Eingabe eines Gargutparameters für voneinander verschiedene Gargüter und eine Steuereinrichtung zur Regelung der Temperatur in jedem Garraumabschnitt auf. Die Temperaturregelung erfolgt dadurch, dass die Dampfzufuhr in Abhängigkeit des Gargutparameters derart einstellbar ist, dass für alle Gargüter, die in dem Garraum gleichzeitig gegart werden, eine einheitliche Behandlungsdauer gewährleistet ist.

Ein weiteres derartiges Dampfgerät ist aus der Patentschrift US 5 075 121 bekannt und wird als nächstliegender Stand der Technik betrachtet.

Der Erfindung stellt sich somit das Problem ein Dampfgargerät anzugeben, bei dem die Funktion des bekannten Dampfgargeräts, nämlich dass für alle Gargüter, die in dem Garraum gleichzeitig gegart werden, eine einheitliche Behandlungsdauer gewährleistet ist, auf konstruktiv einfachere Weise zu verwirklichen.

Erfindungsgemäß wird dieses Problem durch ein Dampfgargerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einem konstruktiv einfacheren Dampfgargerät für das gleichzeitige Garen von voneinander verschiedenen Gargütern in dem Garraum mit dem Zweck, eine einheitliche Behandlungsdauer zu gewährleisten, insbesondere in einer erheblichen Kosteneinsparung, da der Dampfeinlass lediglich in einem einzigen oberen Garraumabschnitt und der Dampfauslass lediglich in einem einzigen unteren Garraumabschnitt angeordnet sind. Des weiteren entfällt die mit den eingesparten Dampfeinlass- und Dampfauslassöffnungen zusammenhängende Peripherie. Der verringerte Platzbedarf kann für die Verwirklichung einer kompakteren Bauform des erfindungsgemäßen Dampfgargeräts oder der hinzugewonnene Platz kann zur Aufnahme von anderen Bauteilen genutzt werden. Darüber hinaus ergibt sich durch die Reduzierung der für das erfindungsgemäße Dampfgargerät erforderlichen Bauteile auch eine Steigerung von dessen Zuverlässigkeit.

Grundsätzlich ist der Gargutparameter nach Art und Anzahl in weiten geeigneten Grenzen wählbar. Zweckmäßigerweise ist der Gargutparameter eine für jedes Gargut vorher festgelegte Soll-Gardauer.

Alternativ hierzu sieht eine andere vorteilhafte Weiterbildung der erfindungsgemäßen Lehre vor, dass der Gargutparameter eine Gargutart ist, der eine in einem ersten Speicher der Steuereinrichtung abgespeicherte Soll-Gardauer mittels einer ersten Auswerteschaltung automatisch zuordenbar ist. Auf diese Weise ist der Bedienkomfort für den Benutzer weiter verbessert.

Eine vorteilhafte Weiterbildung sieht vor, dass die Heizleistung des Heizelements des Dampferzeugers in Abhängigkeit von dem Ausgangssignal des Temperaturfühlers einstellbar ist. Auf diese Weise ist die erfindungsgemäße Lehre auf besonders einfache Weise verwirklicht.

Eine andere vorteilhafte Weiterbildung der erfindungsgemäßen Lehre sieht vor, dass in dem oberen Garraumabschnitt nur eine einzige Dampfeinlassöffnung angeordnet ist, deren freier Querschnitt in Abhängigkeit von dem Gargutparameter einstellbar ist. Hierdurch ist die Anzahl der Bauteile weiter verringert.

Eine weitere vorteilhafte Weiterbildung sieht vor, dass in dem Garraum wenigstens ein Sensor zur Erfassung einer Garguteigenschaft angeordnet ist und den Ausgangssignalen des Sensors in einem zweiten Speicher der Steuereinrichtung abgespeicherte Gargüter und/oder Soll-Gardauern mittels einer zweiten Auswerteschaltung automatisch zuordenbar sind. Auf diese Weise ist der Bedienkomfort für den Benutzer weiter verbessert.

Eine andere vorteilhafte Weiterbildung sieht vor, dass der Garraum eine Aufnahmevorrichtung für wenigstens einen entnehmbaren Garraumteiler aufweist, wobei der Garraum bei eingeschobenen Garraumteiler in vertikal unmittelbar aufeinander folgende Garraumabschnitte unterteilt ist. Hierdurch ist die Temperaturregelung in den durch Garraumteiler begrenzten Garraumabschnitten weiter verbessert.

Eine weitere vorteilhafte Weiterbildung sieht vor, dass das Dampfgargerät ein Anzeigemittel aufweist. Auf diese Weise ist der Bedienkomfort für den Benutzer weiter verbessert.

Ferner stellt sich der Erfindung das Problem, ein Verfahren zum Betreiben eines erfindungsgemäßen Dampfgargeräts anzugeben.

Erfindungsgemäß wird dieses Problem durch ein Verfahren zum Betreiben eines Dampfgargeräts mit den Merkmalen des Patentanspruchs 8 gelöst. Vorteilhafte Ausgestaltungen und Weiterbildungen der Erfindung ergeben sich aus den nachfolgenden Unteransprüchen.

Eine vorteilhafte Weiterbildung der erfindungsgemäßen Lehre sieht vor, dass in Abhängigkeit der über das Eingabemittel eingegebenen Soll-Gardauern für die voneinander verschiedenen Gargüter die Temperaturfühler derart für die Temperaturregelung ausgewählt werden, dass für die Dauer einer Differenzzeit zwischen einer ersten und einer zweiten Soll-Gardauer der Temperaturfühler ausgewählt wird, der in einem oberen Garraumabschnitt angeordnet ist und nach Ablauf der Differenzzeit der Temperaturfühler ausgewählt wird, der in einem unteren Garraumabschnitt angeordnet ist, wobei die erste Soll-Gardauer größer als die zweite Soll-Gardauer ist. Hierdurch ist die erfindungsgemäße Lehre auf besonders einfache Weise verwirklicht.

Eine besonders vorteilhafte Weiterbildung sieht vor, dass einem über das Eingabemittel ausgewählten Gargut eine in dem ersten Speicher der Steuereinrichtung abgespeicherte Soll-Gardauer mittels der ersten Auswerteschaltung automatisch zugeordnet wird. Auf diese Weise ist der Bedienkomfort für den Benutzer verbessert.

Eine weitere vorteilhafte Weiterbildung sieht vor, dass den Ausgangssignalen des Sensors in dem zweiten Speicher der Steuereinrichtung abgespeicherte Gargüter und/oder Soll-Gardauern mittels der zweiten Auswerteschaltung automatisch zugeordnet und dem Benutzer in Abhängigkeit davon auf einem Anzeigemittel Gardauerempfehlungen für die in den einzelnen Garraumabschnitten befindlichen Gargüter angezeigt und zur Übernahme für den Dampfgarvorgang vorgeschlagen werden. Hierdurch ist der Bedienkomfort für den Benutzer weiter verbessert.

Ferner sieht eine andere vorteilhafte Weiterbildung der erfindungsgemäßen Lehre vor, dass auf dem Anzeigemittel die ausgewählten Gargüter mit den zugeordneten Soll-Gardauern angezeigt werden oder dem Benutzer für jedes Gargut ein Garraumabschnitt vorgeschlagen wird. Auf diese Weise ist der Bedienkomfort für den Benutzer weiter verbessert.

Ein Ausführungsbeispiel der Erfindung ist in den Zeichnungen rein schematisch dargestellt und wird nachfolgend näher beschrieben. Es zeigt
- Figur 1: eine Vorderansicht eines Garraums eines erfindungsgemäßen Dampfgargeräts in grob vereinfachter Darstellung,
- Figur 2: den Garraum aus Fig. 1 in gleicher Ansicht mit vollständig mit Dampf gefülltem oberen Garraumabschnitt und
- Figur 3: den Garraum aus Fig. 1 in gleicher Ansicht mit vollständig mit Dampf gefülltem oberen und mittleren Garraumabschnitt.

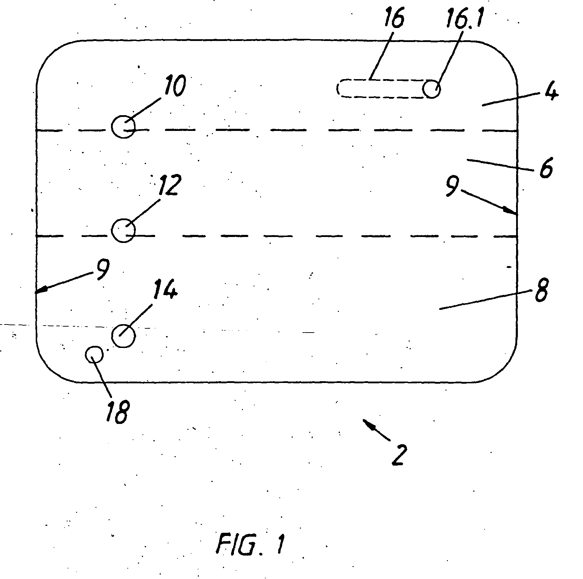

In Fig. 1 ist ein Garraum 2 eines erfindungsgemäßen Dampfgargeräts grob vereinfacht dargestellt. Der Garraum 2 ist bei diesem Ausführungsbeispiel in drei in der dargestellten Betriebslage des Dampfgargeräts vertikal aufeinander folgende Garraumabschnitte, nämlich einem obersten Garraumabschnitt 4, einem mittleren Garraumabschnitt 6 und einem untersten Garraumabschnitt 8, unterteilt. Die imaginären Grenzebenen der zueinander benachbarten Garraumabschnitte 4, 6 und 6, 8 sind durch gestrichelte Linien symbolisch dargestellt. Diese Grenzebenen sind bei diesem Ausführungsbeispiel in deren Lage nicht exakt, sondern lediglich ungefähr. Bei dem vorgenannten Ausführungsbeispiel sind an den Seitenwänden 9 aus dem Garraum 2 entnehmbare und nicht dargestellte Aufnahmegitter angeordnet, in die ebenfalls nicht dargestellte Gargutträger einschiebbar sind. Alternativ zu dem vorliegenden Ausführungsbeispiel ist es möglich, in dem Garraum 2 eine lösbare oder unlösbare Aufnahmevorrichtung für wenigstens einen entnehmbaren Garraumteiler vorzusehen. In diese Aufnahmevorrichtung kann der Benutzer für den Dampfgarvorgang Garraumteiler einschieben. Auf diese Weise werden die oben erläuterten Grenzebenen durch die eingeschobenen Garraumteiler gebildet. Ferner ist es möglich, die Garraumteiler gleichzeitig als Gargutträger zu verwenden.

In jedem Garraumabschnitt 4, 6 und 8 ist jeweils ein Temperaturfühler 10, 12 und 14 angeordnet. In dem obersten Garraumabschnitt 4 ist eine gestrichelt dargestellte Dampfeinlassöffnung 16 angeordnet, die über eine nicht dargestellte Dampfzuleitung mit einem ebenfalls nicht dargestellten Dampferzeuger in Strömungsverbindung steht. Das Dampfgargerät des vorgenannten Ausführungsbeispiels arbeitet mit Sattdampf bei Atmosphärendruck. Abweichend hiervon sind aber auch andere dem Fachmann geläufige Dampfzustände, beispielsweise Über- oder Unterdruck und überhitzter Dampf, denkbar. Um die in den Garraum 2 einströmende Dampfmenge zu regulieren, ist die Heizleistung des Heizelements des Dampferzeugers einstellbar. Zur Regulierung der Geschwindigkeit, mit der der Dampf in den Garraum 2 einströmt, ist der freie Querschnitt der Dampfeinlassöffnung 16.1 einstellbar. Abweichend hiervon sind aber auch andere dem Fachmann geläufige Mittel, beispielsweise ein Ventil in der Dampfzuleitung, denkbar, mit denen die Geschwindigkeit der in den Garraum 2 einströmenden Dampfmenge reguliert werden kann. In dem untersten Garraumabschnitt 8 ist eine Dampfauslassöffnung 18 angeordnet, die über eine nicht dargestellte Dampfableitung mit der freien Umgebung in Strömungsverbindung steht.

Weiterhin weist das erfindungsgemäße Dampfgargerät nicht dargestellte Eingabemittel zur Eingabe eines Gargutparameters für voneinander verschiedene Gargüter und eine ebenfalls nicht dargestellte Steuereinrichtung zur Regelung der Temperatur in jedem Garraumabschnitt 4, 6 und 8 auf. Bei diesem Ausführungsbeispiel ist der Gargutparameter eine für jedes Gargut vorher festgelegte Soll-Gardauer. Ferner weist das erfindungsgemäße Dampfgargerät eine nicht dargestellte Umschaltvorrichtung auf. Mittels der Umschaltvorrichtung ist durch die Steuereinrichtung der für die Temperaturregelung benutzte Temperaturfühler 10, 12 oder 14 in Abhängigkeit von dem Gargutparameter automatisch auswählbar. Die Regelung der Temperatur in jedem Garraumabschnitt 4, 6 und 8 erfolgt dadurch, dass die Dampfzufuhr, also die dem Garraum 2 zugeführte Dampfmenge, in Abhängigkeit des Gargutparameters derart einstellbar ist, dass für alle Gargüter, die in dem Garraum gleichzeitig gegart werden, eine einheitliche Behandlungsdauer gewährleistet ist.

Abweichend hierzu ist es möglich, andere oder weitere Gargutparameter über die Eingabemittel einzugeben bzw. auszuwählen und in der Steuereinrichtung zu verarbeiten. Beispielsweise ist es möglich als Gargutparameter die Gargutart vorzusehen. Einer über das Eingabemittel eingegebenen bzw. ausgewählten Gargutart ist dann eine in einem ersten Speicher der Steuereinrichtung abgespeicherte Soll-Gardauer mittels einer ersten Auswerteschaltung automatisch zuordenbar. Ferner ist es möglich, ein Anzeigemittel vorzusehen, so dass dem Benutzer ausgewählte Garraumparameter und andere mit dem Garvorgang korrelierende Informationen bzw. Geräteinformationen angezeigt werden können.

Alternativ oder ergänzend zu der Eingabe von Gargutparametern wie der Soll-Gargutdauer oder der Gargutart ist es möglich, in dem Garraum wenigstens einen Sensor zur Erfassung einer Garguteigenschaft anzuordnen. Dem Ausgangssignal des Sensors ist dann ein in einem zweiten Speicher der Steuereinrichtung abgespeichertes Gargut und/oder eine darin abgespeicherte Soll-Gardauer mittels einer zweiten Auswerteschaltung automatisch zuordenbar.

Nachfolgend ist die Funktionsweise des obigen Ausführungsbeispiels anhand der Fig. 1 bis 3 näher erläutert:

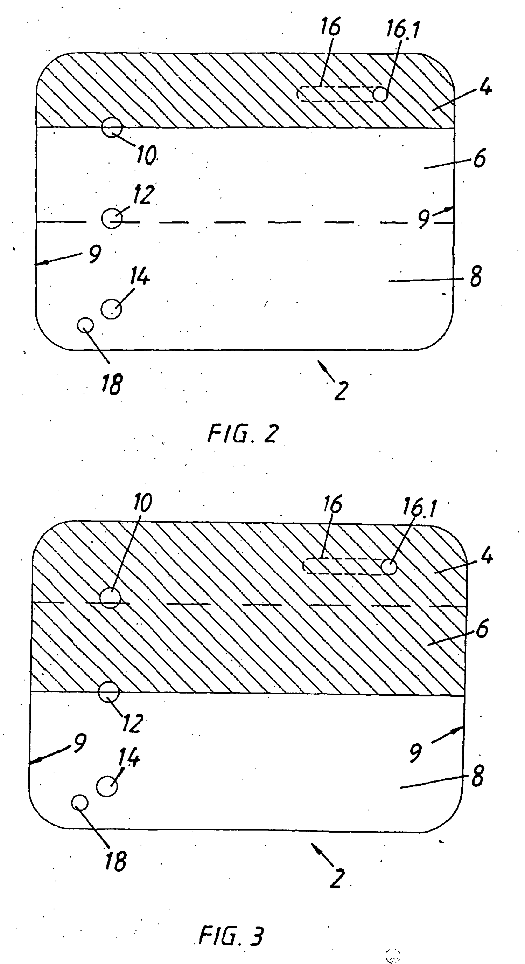

Der Garraum 2 ist geschlossen und in dem Garraum 2 sind auf nicht dargestellten Gargutträgern abgestellte und voneinander verschiedene Gargüter in dem obersten, mittleren und untersten Garraumabschnitten 4, 6, und 8 eingeschoben. Das Gargut mit der längsten Soll-Gardauer ist in dem obersten Garraumabschnitt 4, das Gargut mit der mittleren Soll-Gardauer ist in dem mittleren Garraumabschnitt 6 und das Gargut mit der kürzesten Soll-Gardauer ist in dem untersten Garraumabschnitt 8 eingeschoben. Mittels des Eingabemittels gibt der Benutzer die in der Gebrauchsanweisung des erfindungsgemäßen Dampfgargeräts für die eingeschobenen Gargüter empfohlenen Soll-Gardauern ein. Nach dem Start des Dampfgarvorgangs wird der in dem Dampferzeuger erzeugte Dampf über die Dampfzuleitung und den freien Querschnitt der Dampfeinlassöffnung 16.1 in den obersten Garraumabschnitt 4 eingelassen. Die Menge des dem obersten Garraumabschnitt 4 zugeführten Dampfes wird automatisch zuerst in Abhängigkeit von der durch den Temperaturfühler 10 sensierten Temperatur, also der Temperatur im Garraumabschnitt 4, geregelt. Hierbei wird die Heizleistung des Heizelements des Dampferzeugers in Abhängigkeit der Ausgangssignale des Temperaturfühlers 10 eingestellt. Die Geschwindigkeit, mit der der Dampf in den Garraum 2 einströmt, wird dadurch geregelt, dass der freie Querschnitt der Dampfeinlassöffnung 16.1 in Abhängigkeit des Garraumparameters eingestellt wird. Wird der Dampf mit einer niedrigen Geschwindigkeit in den obersten Garraumabschnitt 4 eingelassen, kommt es kaum zu Verwirbelungen und der zugeführte Dampf füllt den obersten Garraumabschnitt 4 beginnend von der Garraumdecke bis zu der Grenzebene zu dem mittleren Garraumabschnitt 6, in den Fig. 2 und 3 durch eine Schraffur symbolisiert. Beispielsweise wird der freie Querschnitt der Dampfeinlassöffnung 16.1 bei einem großen Unterschied zwischen den einzelnen Soll-Gardauern automatisch vergrößert, so dass der Dampf mit einer sehr niedrigen Geschwindigkeit in den Garraum 2 einströmt und umgekehrt. In Abhängigkeit der mit dem Temperaturfühler 10 sensierten Temperatur kann die Dampfzufuhr derart geregelt werden, dass im Wesentlichen nur der oberste Garraumabschnitt 4 mit Dampf gefüllt wird. Hierdurch ist gewährleistet, dass die in dem mittleren und dem untersten Garraumabschnitt 6, 8 eingeschobenen Gargüter, also die Gargüter mit den kürzeren Soll-Gardauern, noch nicht oder lediglich in einem vernachlässigbaren Maß gegart werden. Nach Ablauf der Differenzzeit zwischen der längsten Soll-Gardauer und der mittleren Soll-Gardauer schaltet die Steuereinrichtung mittels der Umschaltvorrichtung für die Temperaturregelung von dem Temperaturfühler 10 automatisch auf den Temperaturfühler 12 um, so dass die dem Garraum 2 zugeführte Dampfmenge nun in Abhängigkeit von der durch den Temperaturfühler 12 sensierten Temperatur, also der Temperatur im Garraumabschnitt 6, geregelt wird. Da die durch den Temperaturfühler 12 gemessene Temperatur niedriger ist als die durch den Temperaturfühler 10 gemessene Temperatur, wird die Heizleistung des Heizelements des Dampferzeugers erhöht, so dass mehr Dampf in den Garraum 2 einströmt. Der oben erläuterte Ablauf wiederholt sich. Nach Ablauf der Differenzzeit zwischen der mittleren Soll-Gardauer und der kürzesten Soll-Gardauer schaltet die Steuereinrichtung mittels der Umschaltvorrichtung für die Temperaturregelung von dem Temperaturfühler 12 automatisch auf den Temperaturfühler 14 um, so dass die dem Garraum 2 zugeführte Dampfmenge nun in Abhängigkeit von der durch den Temperaturfühler 14 sensierten Temperatur, also der Temperatur im Garraumabschnitt 8, geregelt wird. Der oben erläuterte Ablauf wiederholt sich entsprechend.

In der oben erläuterten einfachsten Ausführungsform wird für die Temperaturregelung immer zuerst der Temperaturfühler 10, also der in dem obersten Garraumabschnitt 4 angeordnete Temperaturfühler, ausgewählt und benutzt. Es obliegt der Sorgfalt des Benutzers, dass das Gargut mit der längsten Soll-Gardauer in dem obersten Garraumabschnitt 4 und die Gargüter mit den kürzeren Soll-Gardauern entsprechend in dem mittleren und dem untersten Garraumabschnitt 6 und 8 eingeschoben sind, um bei den in den Garraum 2 eingeschobenen Gargütern ein optimales Garergebnis zu erhalten.

Wie bereits erläutert ist es abweichend von dieser Ausführungsform möglich, auf einem Anzeigemittel ausgewählte Gargüter mit den zugeordneten Soll-Gardauern anzuzeigen oder dem Benutzer für jedes Gargut einen Garraumabschnitt 4, 6 oder 8 vorzuschlagen. Auf diese Weise hat der Benutzer nochmals die Gelegenheit die eingegebenen Gargutparameter zu kontrollieren. Ferner besteht die Möglichkeit, dass das erfindungsgemäße Dampfgargerät dem Benutzer Einschubebenen bzw. Garraumabschnitte 4, 6 oder 8 vorschlägt. In einer weiteren Ausführungsform der erfindungsgemäßen Lehre ist es denkbar, dass der Benutzer über das Eingabemittel die jeweilige Lage der einzelnen Gargüter eingibt bzw. auswählt. Würde beispielsweise das Gargut mit der längsten Soll-Gardauer in dem mittleren Garraumabschnitt 6 und das Gargut mit der kürzesten Soll-Gardauer in dem untersten Garraumabschnitt 8 eingeschoben, so würde die Steuereinrichtung mittels der Umschaltvorrichtung bei dem Start des Dampfgarvorgangs zuerst den Temperaturfühler 12 und analog zu den obigen Erläuterungen nach Ablauf der Differenzzeit den Temperaturfühler 14 für die Temperaturregelung auswählen. In den obersten Garraumabschnitt 4 wäre in diesem Fall kein Gargut eingeschoben und der Temperaturfühler 10 würde in diesem beispielhaften Dampfgarvorgang nicht für die Temperaturregelung benutzt.

Ferner ist es möglich, anstelle Soll-Gardauern einzugeben über das Eingabemittel Gargüter auszuwählen, die in dem ersten Speicher der Steuereinrichtung abgespeicherten Soll-Gardauern mittels der ersten Auswerteschaltung automatisch zugeordnet werden.

Ebenfalls ist es möglich, dass den Ausgangssignalen des Sensors in dem zweiten Speicher der Steuereinrichtung abgespeicherte Gargüter und/oder Soll-Gardauern mittels der zweiten Auswerteschaltung automatisch zugeordnet und dem Benutzer in Abhängigkeit davon auf einem Anzeigemittel Gardauerempfehlungen für die in den einzelnen Garraumabschnitten befindlichen Gargüter angezeigt und zur Übernahme für den Dampfgarvorgang vorgeschlagen werden. Hierdurch ist eine Ausführungsform mit einem weiter verbesserten Bedienkomfort ermöglicht, da das Dampfgargerät beispielsweise die Gargutart und/oder die Lage des Garguts in dem Garraum 2, also den Garraumabschnitt 4, 6 oder 8, automatisch erkennt.

## Patentansprüche

1. Dampfgargerät mit einem Garraum, der in der Betriebslage des Dampfgargeräts in wenigstens zwei vertikal aufeinander folgende Garraumabschnitte unterteilt und bei dem in jedem Garraumabschnitt ein Temperaturfühler angeordnet ist, einem oberen Garraumabschnitt, in dem eine Dampfeinlassöffnung angeordnet ist, die über eine Dampfzuleitung mit einem Dampferzeuger und einem unteren Garraumabschnitt, in dem eine Dampfauslassöffnung angeordnet ist, die über eine Dampfableitung mit der freien Umgebung in Strömungsverbindung steht, einem Eingabemittel zur Eingabe eines Gargutparameters für voneinander verschiedene Gargüter und einer Steuereinrichtung zur Regelung der Temperatur in jedem Garraumabschnitt, dadurch dass die Dampfzufuhr in Abhängigkeit des Gargutparameters derart einstellbar ist, dass für alle Gargüter, die in dem Garraum gleichzeitig gegart werden, eine einheitliche Behandlungsdauer gewährleistet ist,
**dadurch gekennzeichnet,**
**dass** die Dampfeinlassöffnung (16) nur in einem einzigen oberen Garraumabschnitt (4) und die Dampfauslassöffnung (18) nur in einem einzigen unteren Garraumabschnitt (8) an dem Garraum (2) angeordnet sind und mittels einer Umschaltvorrichtung durch die Steuereinrichtung der für die Temperaturregelung benutzte Temperaturfühler (10, 12, 14) in Abhängigkeit von dem Gargutparameter automatisch auswählbar ist.

2. Dampfgargerät nach Anspruch 1,
**dadurch gekennzeichnet,**
**dass** der Gargutparameter eine für jedes Gargut vorher festgelegte Soll-Gardauer ist.

3. Dampfgargerät nach Anspruch 1,
**dadurch gekennzeichnet,**
**dass** der Gargutparameter eine Gargutart ist, der eine in einem ersten Speicher der Steuereinrichtung abgespeicherte Soll-Gardauer mittels einer ersten Auswerteschaltung automatisch zuordenbar ist.

4. Dampfgargerät nach mindestens einem der Ansprüche 1 bis 3,
**dadurch gekennzeichnet,**
**dass** die Heizleistung des Heizelements des Dampferzeugers in Abhängigkeit von dem Ausgangssignal des Temperaturfühlers (10, 12, 14) einstellbar ist.

5. Dampfgargerät nach einem der vorangegangenen Ansprüche 1 bis 4,
**dadurch gekennzeichnet,**
**dass** in dem oberen Garraumabschnitt (4) nur eine einzige Dampfeinlassöffnung (16) angeordnet ist, deren freier Querschnitt (16.1) in Abhängigkeit von dem Gargutparameter einstellbar ist.

6. Dampfgargerät nach mindestens einem der Ansprüche 1 bis 5,
**dadurch gekennzeichnet,**
**dass** in dem Garraum (2) wenigstens ein Sensor zur Erfassung einer Garguteigenschaft angeordnet ist und den Ausgangssignalen des Sensors in einem zweiten Speicher der Steuereinrichtung abgespeicherte Gargüter und/oder Soll-Gardauern mittels einer zweiten Auswerteschaltung automatisch zuordenbar sind.

7. Dampfgargerät nach mindestens einem der Ansprüche 1 bis 6,
**dadurch gekennzeichnet,**
**dass** der Garraum (2) eine Aufnahmevorrichtung für wenigstens einen entnehmbaren Garraumteiler aufweist, wobei der Garraum (2) bei eingeschobenen Garraumteiler in vertikal unmittelbar aufeinander folgende Garraumabschnitte (4, 6, 8) unterteilt ist.

8. Dampfgargerät nach mindestens einem der Ansprüche 1 bis 7,
**dadurch gekennzeichnet,**
**dass** das Dampfgargerät ein Anzeigemittel aufweist.

9. Verfahren zum Betreiben eines Dampfgargeräts nach mindestens einem der Ansprüche 1 bis 8,
**dadurch gekennzeichnet,**
**dass** mittels der Umschaltvorrichtung durch die Steuereinrichtung der für die Temperaturregelung benutzte Temperaturfühler (10, 12, 14) in Abhängigkeit von dem über das Eingabemittel eingegebenen Gargutparameter automatisch ausgewählt wird.

10. Verfahren nach Anspruch 9,
**dadurch gekennzeichnet,**
**dass** in Abhängigkeit der über das Eingabemittel eingegebenen Soll-Gardauern für die voneinander verschiedenen Gargüter die Temperaturfühler (10, 12, 14) derart für die Temperaturregelung ausgewählt werden, dass für die Dauer einer Differenzzeit zwischen einer ersten und einer zweiten Soll-Gardauer der Temperaturfühler (10, 12) ausgewählt wird, der in einem oberen Garraumabschnitt (4, 6) angeordnet ist und nach Ablauf der Differenzzeit der Temperaturfühler (12, 14) ausgewählt wird, der in einem unteren Garraumabschnitt (6, 8)angeordnet ist, wobei die erste Soll-Gardauer größer als die zweite Soll-Gardauer ist.

11. Verfahren nach einem der Ansprüche 9 oder 10,
**dadurch gekennzeichnet,**
**dass** einem über das Eingabemittel ausgewählten Gargut eine in dem ersten Speicher der Steuereinrichtung abgespeicherte Soll-Gardauer mittels der ersten Auswerteschaltung automatisch zugeordnet wird.

12. Verfahren nach mindestens einem der Ansprüche 9 bis 11,
**dadurch gekennzeichnet,**
**dass** den Ausgangssignalen des Sensors in dem zweiten Speicher der Steuereinrichtung abgespeicherte Gargüter und/oder Soll-Gardauern mittels der zweiten Auswerteschaltung automatisch zugeordnet und dem Benutzer in Abhängigkeit davon auf einem Anzeigemittel Gardauerempfehlungen für die in den einzelnen Garraumabschnitten (4, 6, 8) befindlichen Gargüter angezeigt und zur Übernahme für den Dampfgarvorgang vorgeschlagen werden.

13. Verfahren nach mindestens einem der Ansprüche 9 bis 12,
**dadurch gekennzeichnet,**
**dass** auf dem Anzeigemittel die ausgewählten Gargüter mit den zugeordneten Soll-Gardauern angezeigt werden oder dem Benutzer für jedes Gargut ein Garraumabschnitt (4, 6, 8) vorgeschlagen wird.

## Claims

1. Steam cooking appliance, having a cooking chamber which, in the operating position of the steam cooking appliance, is divided into at least two vertically adjacent cooking chamber portions, and wherein a temperature sensor is disposed in each cooking chamber portion, an upper cooking chamber portion, in which is disposed a steam inlet opening which is in flow connection with a steam generator via a steam supply line, and a lower cooking chamber portion, in which is disposed a steam outlet opening which is in flow connection with the free surrounding area via a steam outlet line, an input means for the input of a food parameter for foods which are different from one another, and a control device for the regulation of the temperature in each cooking chamber portion, because the supply of steam is adjustable in dependence on the food parameter in such a manner that, for all of the foods which are cooked simultaneously in the cooking chamber, a uniform treatment period is ensured, **characterised in that** the steam inlet opening (16) is only disposed in a single upper cooking chamber portion (4) and the steam outlet opening (18) is only disposed in a single lower cooking chamber portion (8) on the cooking chamber (2), and the temperature sensor (10, 12, 14), which is used for regulating the temperature, is automatically selectable, in dependence on the food parameter, by the control device by means of a switching apparatus.

2. Steam cooking appliance according to claim 1, **characterised in that** the food parameter is a desired cooking period predetermined for each food.

3. Steam cooking appliance according to claim 1, **characterised in that** the food parameter is a type of food to which a desired cooking period, stored in a first storage unit of the control device, can be automatically allocated by means of a first evaluation circuit.

4. Steam cooking appliance according to at least one of claims 1 to 3, **characterised in that** the thermal energy of the heating element of the steam generator is adjustable in dependence on the output signal of the temperature sensor (10, 12, 14).

5. Steam cooking appliance according to one of the preceding claims 1 to 4, **characterised in that**, in the upper cooking chamber portion (4), only a single steam inlet opening (16) is disposed, the free cross-section (16.1) of which is adjustable in dependence on the food parameter.

6. Steam cooking appliance according to at least one of claims 1 to 5, **characterised in that**, in the cooking chamber (2), at least one sensor is disposed for detecting a food property, and foods and/or desired cooking periods, stored in a second storage unit of the control device, can be automatically allocated to the output signals of the sensor by means of a second evaluation circuit.

7. Steam cooking appliance according to at least one of claims 1 to 6, **characterised in that** the cooking chamber (2) has an accommodation apparatus for at least one removable cooking chamber divider, the cooking chamber (2) being divided into vertically directly adjacent cooking chamber portions (4, 6, 8) when the cooking chamber divider has been inserted.

8. Steam cooking appliance according to at least one of claims 1 to 7, **characterised in that** the steam cooking appliance has a display means.

9. Method of operating a steam cooking appliance according to at least one of claims 1 to 8, **characterised in that** the temperature sensor (10, 12, 14), used for regulating the temperature, is automatically selected, in dependence on the food parameter input via the input means, by the control device by means of the switching apparatus.

10. Method according to claim 9, **characterised in that**, in dependence on the desired cooking periods, input via the input means, for the foods which are different from one another, the temperature sensors (10, 12, 14) for the regulation of the temperature are selected in such a manner that, for the period of a differential time between a first desired cooking period and a second desired cooking period, the temperature sensor (10, 12) which is disposed in an upper cooking chamber portion (4, 6) is selected and, after the differential time has lapsed, the temperature sensor (12, 14) which is disposed in a lower cooking chamber portion (6, 8) is selected, the first desired cooking period being longer than the second desired cooking period.

11. Method according to one of claims 9 or 10, **characterised in that** a desired cooking period, stored in the first storage unit of the control device, is automatically allocated to a food, selected via the input means, by means of the first evaluation circuit.

12. Method according to at least one of claims 9 to 11, **characterised in that** foods and/or desired cooking periods, stored in the second storage unit of the control device, are automatically allocated to the output signals of the sensor by means of the second evaluation circuit and, in dependence thereon, cooking period recommendations for the foods, situated in the individual cooking chamber portions (4, 6, 8), are displayed to the user on a display means and are proposed for carrying out the steam cooking operation.

13. Method according to at least one of claims 9 to 12, **characterised in that**, on the display means, the selected foods are displayed with the allocated desired cooking periods, or a cooking chamber portion (4, 6, 8) is proposed to the user for each food.

## Revendications

1. Appareil de cuisson à la vapeur comprenant un compartiment de cuisson qui, dans la position de fonctionnement de l'appareil de cuisson à la vapeur, est divisé en au moins deux sections de compartiment de cuisson successifs verticalement et dans lequel une sonde de température est disposée dans chaque section de compartiment de cuisson, une section de compartiment de cuisson supérieure dans laquelle est disposée une ouverture d'entrée de vapeur qui est en liaison d'écoulement avec un générateur de vapeur par l'intermédiaire d'une conduite d'amenée de vapeur et une section de compartiment de cuisson inférieure dans laquelle est disposée une ouverture de sortie de vapeur qui est en liaison d'écoulement avec le milieu libre par l'intermédiaire d'une conduite d'évacuation de vapeur, un moyen d'entrée pour entrer un paramètre de produit à cuire pour des produits à cuire différents les uns des autres et un dispositif de commande pour réguler la température dans chaque section de compartiment de cuisson par le fait que l'amenée de valeur est réglage en fonction du paramètre de produit à cuire de façon qu'une durée de traitement unique soit garantie pour tous les produits à cuire qui sont cuits en même temps dans le compartiment de cuisson,
**caractérisé en ce**
**que** l'ouverture d'entrée de vapeur (16) n'est disposée que dans une seule section de compartiment de cuisson supérieure (4) et l'ouverture de sortie de vapeur (18) que dans une seule section de compartiment de cuisson inférieure (8) sur le compartiment de cuisson (2) et que la sonde de température (10, 12, 14) utilisée pour la régulation de température est sélectionnable automatiquement en fonction du paramètre de produit à cuire par le dispositif de commande au moyen d'un dispositif de commutation.

2. Appareil de cuisson à la vapeur selon la revendication 1,
**caractérisé en ce**
**que** le paramètre de produit à cuire est une durée de cuisson de consigne prédéfinie pour chaque produit à cuire.

3. Appareil de cuisson à la vapeur selon la revendication 1,
**caractérisé en ce**
**que** le paramètre de produit à cuire est un type de produit à cuire auquel une durée de cuisson de consigne mémorisée dans une première mémoire du dispositif de commande peut être affectée automatiquement au moyen d'un premier circuit d'évaluation.

4. Appareil de cuisson à la vapeur selon au moins l'une des revendications 1 à 3,
**caractérisé en ce**
**que** la puissance de chauffage de l'élément chauffant du générateur de vapeur est réglable en fonction du signal de sortie de la sonde de température (10, 12, 14).

5. Appareil de cuisson à la vapeur selon l'une des revendications précédentes 1 à 4,
**caractérisé en ce**
**qu'**une seule ouverture d'entrée de vapeur (16) est disposée dans la section de compartiment de cuisson supérieure (4), dont la section libre (16.1) est réglable en fonction du paramètre de produit à cuire.

6. Appareil de cuisson à la vapeur selon au moins l'une des revendications 1 à 5,
**caractérisé en ce**
**qu'**au moins un capteur permettant de saisir une caractéristique de produit à cuire est disposé dans le compartiment de cuisson (2) et que des produits à cuire et/ou des durées de cuisson de consigne mémorisés dans une deuxième mémoire du dispositif de commande peuvent être affectés automatiquement aux signaux de sortie du capteur au moyen d'un deuxième circuit d'évaluation.

7. Appareil de cuisson à la vapeur selon au moins l'une des revendications 1 à 6,
**caractérisé en ce**
**que** le compartiment de cuisson (2) présente un dispositif de réception pour au moins un séparateur de compartiment de cuisson amovible, le compartiment de cuisson (2) étant divisé en sections de compartiment de cuisson (4, 6, 8) immédiatement successifs verticalement quand le séparateur de compartiment de cuisson est inséré.

8. Appareil de cuisson à la vapeur selon au moins l'une des revendications 1 à 7,
**caractérisé en ce**
**que** l'appareil de cuisson à la vapeur présente un moyen d'affichage.

9. Procédé de fonctionnement d'un appareil de cuisson à la vapeur selon au moins l'une des revendications 1 à 8,
**caractérisé en ce**
**que** la sonde de température (10, 12, 14) utilisée pour la régulation de température est sélectionnée automatiquement par le dispositif de commande au moyen du dispositif de commutation en fonction du paramètre de produit à cuire entré par le biais du moyen d'entrée.

10. Procédé selon la revendication 9,
**caractérisé en ce**
**que** les sondes de température (10, 12, 14) sont sélectionnées pour la régulation de température en fonction des durées de cuisson de consigne entrées par le biais du moyen d'entrée pour les produits à cuire différents les uns des autres de façon que, pour la durée d'une différence de temps entre une première et une deuxième durée de cuisson de consigne, on sélectionne la sonde de température (10, 12) qui est disposée dans une section de compartiment de cuisson supérieure (4, 6) et, après expiration de la différence de temps, on sélectionne la sonde de température (12, 14) qui est disposée dans une section de compartiment de cuisson inférieure (6, 8), la première durée de cuisson de consigne étant plus grande que la deuxième durée de cuisson de consigne.

11. Procédé selon l'une des revendications 9 ou 10,
**caractérisé en ce**
**qu'**une durée de cuisson de consigne mémorisée dans la première mémoire du dispositif de commande est affectée automatiquement à un produit à cuire sélectionné par le biais du moyen d'entrée au moyen du premier circuit d'évaluation.

12. Procédé selon au moins l'une des revendications 9 à 11,
**caractérisé en ce**
**que** des produits à cuire et/ou des durées de cuisson de consigne mémorisés dans la deuxième mémoire du dispositif de commande sont affectés automatiquement aux signaux de sortie du capteur au moyen du deuxième circuit d'évaluation et qu'en fonction de cela des recommandations de durée de cuisson pour les produits à cuire se trouvant dans les différentes sections de compartiment à cuire (4, 6, 8) sont indiquées à l'utilisateur sur un moyen d'affichage et leur adoption pour la cuisson à la vapeur est proposée.

13. Procédé selon au moins l'une des revendications 9 à 12,
**caractérisé en ce**
**que** les produits à cuire sélectionnés avec les durées de cuisson de consigne affectées sont indiqués sur le moyen d'affichage ou une section de compartiment à cuire (4, 6, 8) y est proposée à l'utilisateur pour chaque produit à cuire.
